# EUROPEAN PATENT SPECIFICATION

(11) **EP 0 361 262 B1**
(45) Date of publication and mention of the grant of the patent: **16.06.1993**
(21) Application number: 89117228.0
(22) Date of filing: 18.09.1989
(51) Int. Cl.: C08G 81/00

(54) **Preparation of poly(aryl ether/thioether) segmented block copolymers**
Herstellung von segmentierten Poly(aryl-äther/thioäther)-Blockmischpolymeren
Préparation de copolymères de poly(aryl-éthers/thioéthers) à blocs segmentés

(30) Priority: 23.09.1988 US 248080
(43) Date of publication of application: 04.04.1990
(73) Proprietor: THE DOW CHEMICAL COMPANY, Midland Michigan 48640-1967 (US)
(72) Inventor: Mullins, Michael J., Midland Michigan 48640 (US); Woo, Edmund P., Midland Michigan 48640 (US)
(74) Representative: Sternagel, Hans-Günther, Dr.

(56) References cited:
- EP-A- 0 268 765
- US-A- 4 175 175

## Description

This invention relates to polyether copolymers. More particularly, the invention relates to poly(aryl ether/thioether) segmented block copolymers and to the preparation of such segmented block copolymers.

Poly(aryl ethers/thioethers) are well-known resinous materials for which there are numerous commercial applications. They have good thermal and mechanical characteristics, and exhibit a wide range of other physical properties. Poly(aryl ethers/thioethers) may be categorized as amorphous or crystalline. The crystalline polymers are exceptionally chemically resistant, costly, generally insoluble in common organic solvents, and have generally low glass transition temperatures which limits their use temperatures. By contrast, the commercially available amorphous poly(aryl ether/thioethers) generally have higher glass transition temperatures and are less costly, but are also less resistant to organic solvents.

Attempts to modify the properties of poly(aryl ether/thioether) resins by blending with other polymeric materials are quite often unsatisfactory because of the incompatibility of the poly(aryl ether/thioethers) with other resinous materials. To overcome this problem, it has been proposed to polymerize one poly(aryl ether/thioether) with other poly(aryl ethers/thioethers) in order to produce poly(aryl ether/thioether) segmented block copolymers. For example, the desirable characteristics of poly(aryl ether ketones) and poly(aryl ether sulfones), e.g., solvent resistance and high glass transition temperature (T_{g}), may be achieved by preparing a poly(aryl ether) segmented block copolymer containing both chemical groups.

Methods for preparing random poly(aryl ether) copolymers are known. Poly(ether ketone) and poly(ether sulfone) have been copolymerized by a displacement reaction, utilizing a diaryl sulfone solvent, as disclosed in "Synthesis and Properties of Polyaryletherketones", T. E. Attwood, et al., Polymer, 22, 1096 (1981). However, attempts to prepare block copolymers were unsuccessful. In "Synthesis and Characterization of Poly(Arylene Ether Ketone Sulfone) Copolymers", S. D. Wu, et al., J. Am. Chem. Soc. Polymer Prep. 227, Vol (26)2 (1985), two processes were disclosed. The first combined poly(aryl sulfone) oligomers with difluorobenzophenone monomers in an N-methyl-2-pyrrolidinone solvent, to prepare a poly(aryl ether ketone sulfone) alternating copolymer. The article described this process as simple "chain extension". The poly(aryl sulfone) oligomers were subject to ether exchange, resulting in randomization of the copolymer. The second process produced alternating copolymers from difluorobenzophenone and chlorophenylsulfone monomers, reacted together in a diphenyl sulfone solvent. Likewise, ether interchange promoted randomization of the copolymer.

The present invention is directed toward a novel class of poly(aryl ether/thioether) segmented block copolymers, and their preparation. The poly(aryl ether/thioether) segmented block copolymers of the present invention are surprisingly prepared by:
contacting at a temperature from 150°C to 400°C at least one activated poly(aryl ether/thioether) polymer, corresponding to the formula: 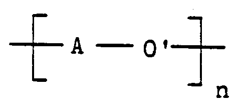
wherein A is an activated aromatic radical,
O' is oxygen or sulfur in the case of a thioether, and n represents the number of repeated activated aryl ether/thioether units, preferably from 20 to 200, more preferably 40 to 100,
with at least one activated poly(aryl ether/thioether) polymer corresponding to the formula: 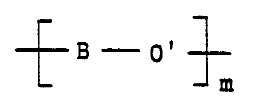
wherein B is an activated aromatic radical, different from the A radical, O' is oxygen or sulfur in the case of a thioether, and m represents the number of repeated activating aryl ether/thioether units, preferably from 20 to 200, more preferably 40 to 100 wherein A and B are different and independently selected from: 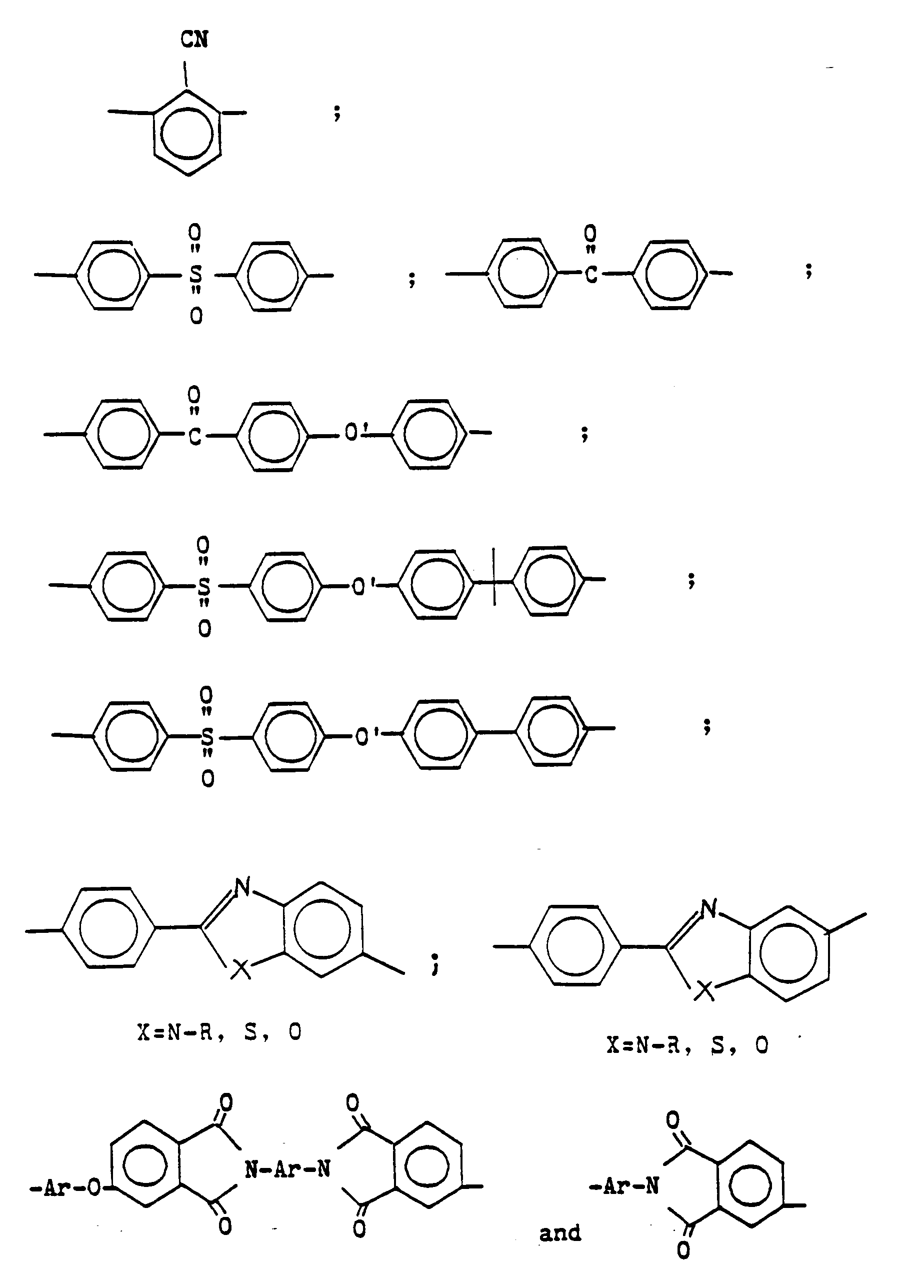
wherein Ar, independently each occurrence is m-phenylene, p-phenylene, pC₆H₄C(CH₃)₂pC₆H₄, pC₆H₄OpC₆H₄, pC₆H₄SpC₆H₄, pC₆H₄CH₂pC₆H₄, pC₆H₄C₆H₄, or pC₆H₄SO₂pC₆H₄; X is N-R, S or O; and R is C₁-c₁₂ alkyl.
in the presence of a catalyst corresponding to the formula:

MₚZ_{q}

wherein M represents a monovalent or multivalent metal ion, Z is a halide, carbonate, bicarbonate, phenoxide, bisphenoxide, alkoxide, cyanide, nitrate, nitrite, hydroxide, phosphate, or aryl or alkyl carboxylate ion, and p and q are each independently whole numbers in the range from 1 to 6 which satisfy chemical valency requirements to prepare a poly(aryl ether/thioether) segmented block copolymer corresponding to the formula: 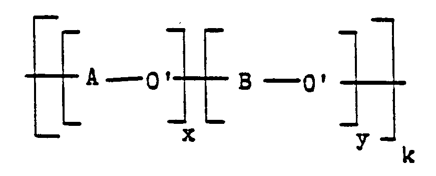
wherein A, B, and O' are as previously defined, x represents the number of repeated activated aryl ether/thioether units containing the A radical, y represents the number of repeated activated aryl ether/thioether units containing the B radical, and k represents the overall degree of polymerization, from 2 to 100, preferably from 2 to 50.

The subscripts x and y, representing the numbers of repeated active aryl ether/thioether units, are each independently conveniently in the range of 30 to 200. However, it must be understood that the exchange reaction, by which the poly(aryl ether/thioether) segmented block copolymers are prepared, may be employed to prepare block copolymers in which x and y are each independently in the range of 2 to 10,000, preferably 2 to 200, most preferably 30 to 200.

As indicated above, the poly(aryl ether/thioether)segmented block copolymers of the present invention may alternatively be prepared using either poly(aryl ether) homopolymers or poly(aryl thioether) homopolymers or mixtures of each. A thioether is understood to mean an ether compound wherein a sulfur atom is substituted for the normally present ether oxygen atom.

A and B are different radicals. By different is meant dissimilar in any respect, such as for example, structurally, chemically or sterically.

The poly(aryl ether/thioether) segmented block copolymers prepared according to the present invention exhibit high temperature dimensional stability and excellent thermoplastic engineering properties, as well as superior solvent resistance when prepared in crystalline form, making them particularly suitable for producing molded plastic components.

Accordant with the present invention, poly(aryl ether/thioether) segmented block copolymers are prepared by reacting together "activated" poly(aryl ether/thioether) polymers to form a segmented block copolymer, represented by the formula: 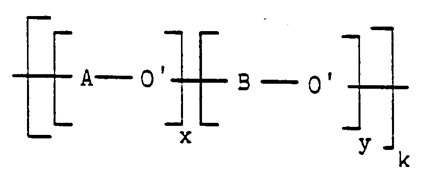
wherein A, B, O', x, y and k are as previously defined.

The poly(aryl ether/thioether) homopolymers of the present invention may be prepared by the polycondensation of an aromatic acid in the presence of a boron trifluoride-hydrogen fluoride catalyst. See US-A-3,442,857.

Alternatively, poly(aryl ether/thioether) homopolymers may be prepared by the polycondensation of the anhydrous alkali metal salt of an aryl fluoride in the presence of diphenyl sulphone solvent, as disclosed in Attwood et al., Polymer, vol. 22, p. 1096 (1981).

Additional methods for preparing poly(aryl ethers/thioethers) are disclosed in GB-A-'s 971,227, 1,177,183 and 1,387,303, and in US-A-4,175,175.

Poly(aryl ether/thioether) segmented block copolymers may be prepared from mer units, selected from: 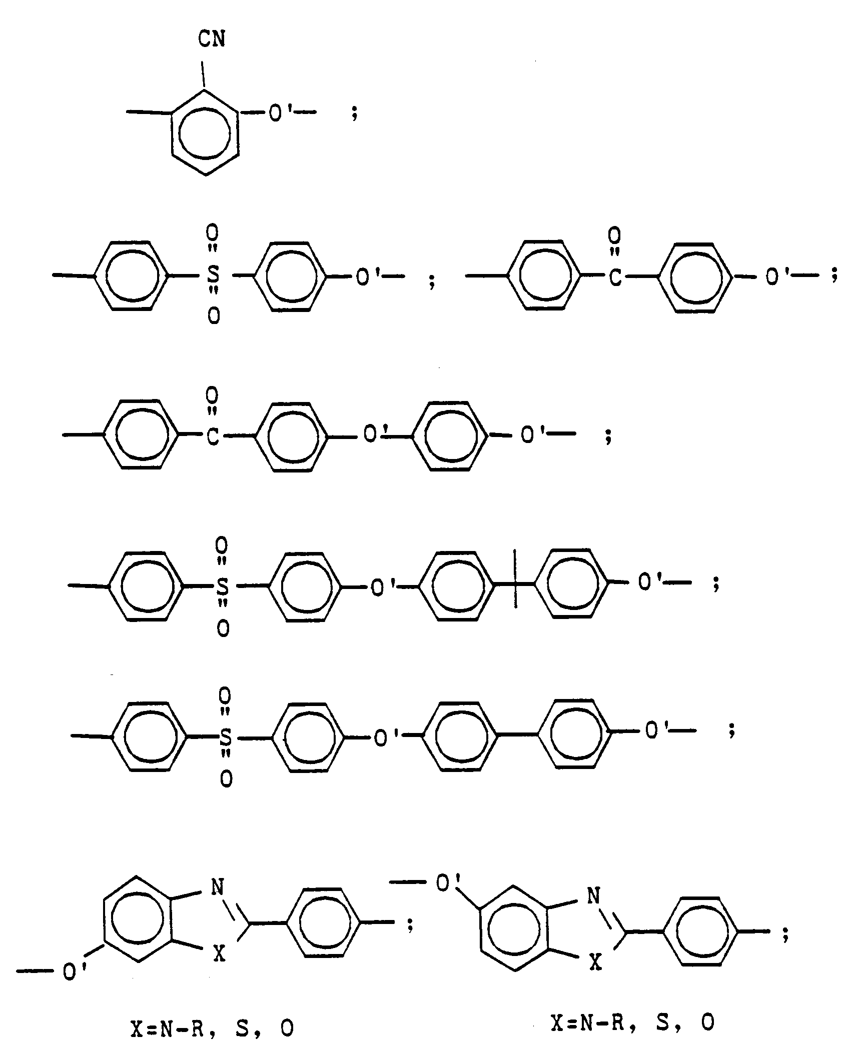 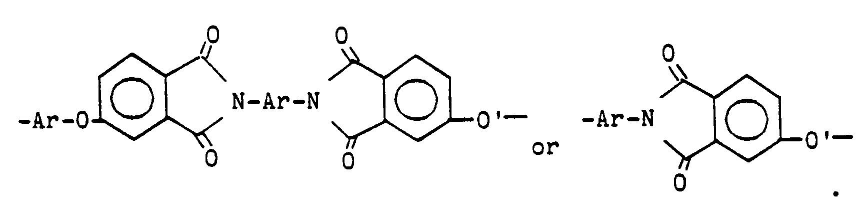
Ar each, independently = m-phenylene, p-phenylene,
pC₆H₄C(CH₃)₂pC₆H₄, pC₆H₄OpC₆H₄, pC₆H₄SpC₆H₄, pC₆H₄CH₂pC₆H₄, pC₆H₄C₆H₄, or pC₆H₄SO₂pC₆H₄.

Preferred activated poly(aryl ether/thioether) homopolymers are poly(ether sulfone) and poly(ether ether ketone).

The exchange catalyst suitable for use in the present invention is represented by the formula:

MₚZ_{q}

wherein M represents a monovalent or multivalent metal ion, Z is a halide, carbonate, bicarbonate, phenoxide, bisphenoxide, alkoxide, cyanide, nitrate, nitrite, hydroxide, phosphate, or aryl or alkyl carboxylate radical, and p and q are whole numbers in the range from 1 to 6 which satisfy chemical valency requirements. An effective amount of catalyst, according to the present invention, is that amount which will catalyze the reaction between poly(aryl ether/thioether) polymers to prepare a poly(aryl ether/thioether) segmented block copolymer. Preferred catalysts, according to the present invention, are cesium fluoride, cesium carbonate and cesium phenoxide. A most preferred catalyst is cesium phenoxide.

The segmented block copolymerization of the present invention is carried out by blending poly(aryl ether/thioether) homopolymers, at a temperature at least as high as the highest of the glass transition temperatures of the oligomers, in the presence of the exchange catalyst, and optionally in the presence of a solvent. High boiling point solvents, such as for example, diphenyl sulfone or benzophenone are preferred. Copolymerization is allowed to proceed until the desired block segment lengths are achieved, as determined by experimentation, at which time the reaction is terminated. The reaction is effected at temperatures in the range from 150°C to 400°C, depending upon the glass transition temperatures of the oligomers; preferably the range is from 250°C to 350°C; most Preferably, the effective temperature range is from 280°C to 320°C. The reaction time ranges preferably from 1 minute to 100 hours, more preferably from 10 minutes to 5 hours, most preferably from 30 minutes to 2 hours. The catalyst is preferably employed in an amount in the range from 0.001 to 10.0 weight percent; more preferably the range is from 0.01 to 2.0 weight percent; most preferably, the effective range is from 0.1 to 0.5 weight percent.

The segmented block copolymers of the present invention may be prepared by contacting, under poly(aryl ether/thioether) segmented block copolymer forming conditions, varying quantities of activated poly(aryl ether/thioether) polymers, wherein the ratio of polymer having aromatic groups represented by A, to polymer having aromatic groups represented by B, is in the range from 99:1 to 1:99.

While not wishing to be bound by any particular theory regarding the copolymerization reaction of the present invention, it is believed that the probable mechanism comprises two distinct steps.

The initial step involves chain cleavage by the nucleophilic anion of an exchange catalyst salt at one of the oxygen/sulfur-carbon bonds in one of the poly(aryl ether/thioether) polymer molecules: 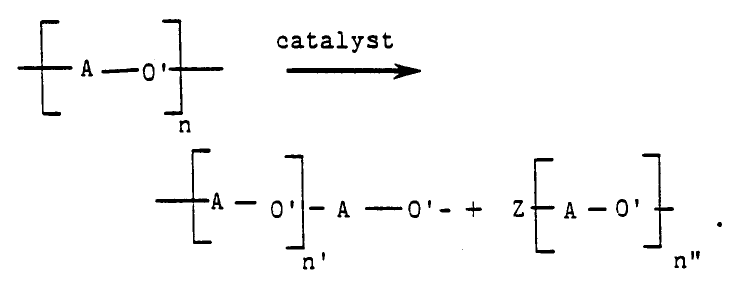
This produces two polymer fragments; a shortened neutral poly(aryl ether/thioether) polymer molecule having a catalyst salt ion terminus, and an anionic phenate terminated poly(aryl ether/thioether) polymer molecule.

In the second step, the anionic fragment produced in the first step attacks another poly(aryl ether/thioether) polymer molecule at an ether/thioether linkage: 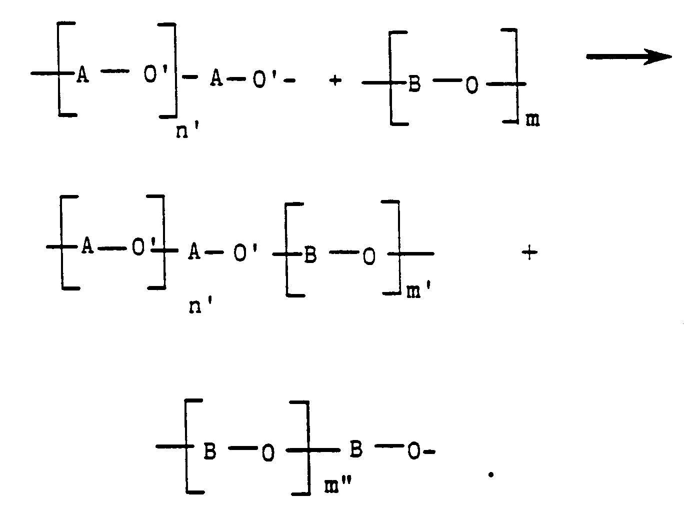
As in step one, a neutral molecule is formed as well as an anionic molecule. The neutral polymer molecule is the segmented block copolymer. The resultant anionic polymer molecule is free to attack other polymer molecules to form new polymers and new anionic molecules.

As the reaction proceeds, the concentration of homopolymers decreases, and the concentration of segmented block copolymers increases. Also, the copolymer block segment lengths decrease with time. The relative lengths of the poly(aryl ether/thioether) block segments tend to be proportional to their respective starting homopolymer percentages.

There are several advantages in the preparation of the poly(aryl ether/thioether) segmented block copolymers of the present invention over the prior art. The present process may be practiced using relatively inexpensive blending equipment. The tremendous capital investment normally required to commercialize a new engineering thermoplastic is thereby circumvented. In the conventional method for the preparation of poly(aryl ether/thioether) copolymers, it is necessary to prepare each block separately before linking them in a final reaction. The present invention allows for the preparation of segmented block copolymers having various block segment lengths, depending upon the reaction conditions. This is an important advantage since copolymer properties are strongly dependent on block segment lengths. The present invention allows for the preparation of high molecular weight crystalline block copolymers.

During the reactive blending process of the present invention, the amount of poly(aryl ether/thioether) segmented block copolymer increases, and the lengths of the block segments decrease. The properties of the resultant segmented block copolymer product may be changed by modifying the reaction conditions, such as the length of time that the polymers are reacted together, the nature of the poly(aryl ether/thioether) homopolymers, or the reaction temperature. It is known that the minimum copolymer block segment lengths required for a copolymer to exhibit single phase behavior is strongly dependent on the solubility characteristics of the blocks in the copolymer. Poly(aryl ether/thioether) polymers may be contacted under reactive conditions resulting in a product in which only one percent of the homopolymers have combined to form a poly(aryl ether/thioether) segmented block copolymer.

The homogeneous poly(aryl ether/thioether) segmented block copolymers of the present invention are more easily formed into finished products than the corresponding immiscible blends of the unreacted poly(aryl ether/thioether) homopolymers. When molding finished products from immiscible multi-phase polymer blends, the morphology of the molded pieces will determine their structural integrity. Likewise, the heat distortion temperature of an immiscible blend will often be determined by the lowest glass transition temperature of the polymers. The single phase poly(aryl ether/thioether) segmented block copolymers obtainable by the present invention overcome the aforementioned processing difficulties, resulting in isotropic molded articles having a glass transition temperature which is intermediate, relative to the original homopolymer blend.

The procedure of blending polymers for commercial use is commonly practiced in order to improve one or more properties of one of the polymers by the addition of another. In the present invention, the properties of the homogeneous single-phase segmented block copolymer are generally intermediate between the properties of the starting homopolymer materials. In this fashion, improved molding compositions may be obtained at minimal additional cost.

Combinations of polymers which are miscible, and which therefore form homogeneous blends, are rare. Generally, polymer blends consist of immiscible segregated domains which suffer from poor adhesion with one another, resulting in finished molded products exhibiting poor ductility and impact resistance. The present invention may advantageously be employed to transform immiscible poly(aryl ether/thioether) homopolymer blends into a homogeneous block copolymer or, during the early stages of the reactive blending process, a composition comprising a compatibilizing amount of the segmented block copolymer and a residual amount of the homopolymers. It is known that block copolymers are often excellent compatibilizing agents for their constituent homopolymers. See Kirk-Othmer "Encyclopedia of Chemical Technology," 3rd Edition, vol. 18, p. 433 (1982).

The invention is more easily comprehended by reference to specific embodiments which are representative of the invention.

### Example 1

### Preparation of a 50/50 Block Copolymer From Poly(Ether Sulfone) and Poly(Ether Ether Ketone)

A mixture of 15.0 g of poly(ether sulfone) (a poly(aryl ether) having an electron-withdrawing group in the para position sold by Imperial Chemical Industries under the trade designation PES 3600G), 15.00 g of poly(ether ether ketone) (a poly (aryl ether) having an electron-withdrawing group in the para position sold by Imperial Chemical Industries under the trade designation VICTREX™ 380P), and 15.00 g of diphenyl sulfone was placed into a 300 mℓ glass resin kettle. The mixture was dried by evacuating the kettle for 1 hour at 150°C. A catalyst (257.8 mg of cesium phenoxide) was added. Oxygen was purged from the system by applying a nitrogen blanket, and the kettle immersed in a salt bath. The temperature of the stirred reaction mixture was raised from 234°C to 335°C over a period of 15 minutes, and maintained at the higher temperature for an additional 196 minutes. The resultant solidified mixture was broken into pieces and placed in a Soltex extractor having a methylene chloride reflux for 24 hours. Methylene chloride was evaporated from the mixture, and diphenyl sulfone was removed using bulb-to-bulb distillation at 200°C and 26.3 Pa (0.2 mm Hg). The undistilled residue weighed 1.98 g, thereby indicating that the poly(ether sulfone) had been incorporated into a methylene chloride-insoluble poly(ether sulfone)-poly(ether ether ketone) copolymer. The methylene chloride-insoluble portion from the Soltex extractor was dried overnight in a vacuum oven maintained at 140°C, resulting in 28.04 g of the segmented block copolymer having an inherent viscosity of 0.74 dL/g in H₂SO₄ at 25°C. Differential scanning calorimetry indicated two Tg's at 160°C and 225°C, and a melting endotherm at 338°C. This data indicates that the block segment lengths were sufficiently long so as to cause the copolymer to exhibit thermal behavior similar to that of the homopolymers.

### Example 2

### Preparation of a 50/50 Random Copolymer From Poly(Ether Sulfone) and Poly(Ether Ether Ketone)

The exchange reaction of Example 1 was repeated, excepting that a greater quantity of catalyst was employed, and the reaction time was extended, in order to prepare a copolymer approaching a random configuration. A mixture of 10.00 g of the poly(ether sulfone), 10.00 g of the poly (ether ether ketone), 10.00 g of diphenyl sulfone, and 518.7 g of cesium phenoxide was used. The exchange reaction proceeded at 330°C for 255 minutes. The copolymer yield was 17.61 g, and exhibited an inherent viscosity of 0.59 dL/g in H₂SO₄ at 25°C. Differential scanning calorimetry indicated a single T_{g} at 182°C, and no crystallization endotherm.

### Comparison 1

### Preparation of a 50/50 Blend Poly(Ether Sulfone) and Poly(Ether Ether Ketone)

In order to demonstrate that the polymers prepared in Examples 1 and 2 were copolymers and not blends, the procedure described in Example 1 was repeated, excepting that a catalyst was not used. A mixture of 15.00 g of the poly(ether sulfone), 10.00 g of the poly(ether ether ketone) and 20.00 g of diphenyl sulfone was prepared. The stirred mixture was heated from 300°C to 330°C over a 10 minute period, then maintained at the higher temperature for 170 minutes. After workup as in Example 1, 15.61 g of material was extracted by methylene chloride, while 9.03 g of the poly(ether ether ketone) remained undissolved. The poly(ether sulfone) was extractable by methylene chloride because it had not been covalently bound to the poly(ether ether ketone).

### Example 3

### Preparation of a 50/50 Block Copolymer from Poly(Ether Imide) and Poly(Ether Ether Ketone)

A mixture of 15.00 g of a poly(ether imide) (a poly(aryl ether) having an electron-withdrawing group in the para position sold by General Electric under the trade designation ULTEM™ 1000), 15.00 g of poly(ether ether ketone) (sold by imperial Chemical Industries under the trade designation VICTREX™ 380P), and 15.00 g of diphenyl sulfone was placed in a 300 mL glass resin kettle. The mixture was dried by evacuating the kettle for 1.5 hours at 150°C. A catalyst (72.1 mg of cesium phenoxide) was added. Oxygen was purged from the system by applying a nitrogen blanket, and the kettle immersed in a salt bath. The temperature of the stirred reaction mixture was raised from 316°C to 335°C over a period of 15 minutes, and maintained at the higher temperature for an additional 2.5 hours. The resultant solidified mixture was broken into pieces and placed in a Soltex extractor having a methylene chloride reflux for 24 hours. Methylene chloride was evaporated from the mixture, and diphenyl sulfone was removed using bulb-to-bulb distillation at 200°C and 26.3 Pa (0.2 mm Hg). The undistilled residue weighed 1.40 g, thereby indicating that the poly(ether imide) had been incorporated into a methylene chloride-insoluble poly(ether imide)-poly(ether ether ketone) copolymer. The methylene chloride-insoluble portion from the Soltex extractor was dried overnight in a vacuum oven maintained at 140°C, resulting in 31.04 g of the segmented block copolymer.

### Example 4

### Preparation of a 50/50 Block Copolymer From Poly(Ether Imide) and Poly(Ether Ether Ketone)

A mixture of 10.00 g of a poly(ether imide) (sold by General Electric under the trade designation ULTEM™ 1000), 15.00 g of poly(ether ether ketone) sold by Imperial Chemical Industries under the trade designation VICTREX™ 380P), and 10.00 g of diphenyl sulfone was placed in a 300 mL glass resin kettle. The mixture was dried by evacuating the kettle for 1 hour at 100°C. A catalyst (174.1 mg of cesium phenoxide) was added. Oxygen was purged from the system by applying a nitrogen blanket, and the kettle immersed in a salt bath. The temperature of the stirred reaction mixture was raised from 170°C to 340°C over a period of 60 minutes, and maintained at the higher temperature for an additional 15 minutes. The resultant solidified mixture was broken into pieces and placed in a Soxlet extractor having a methylene chloride reflux for 24 hours. Methylene chloride was evaporated from the mixture, and diphenyl sulfone was removed using bulb-to-bulb distillation at 200°C and 26.3 Pa (0.2 mm Hg). The methylene chloride-insoluble portion from the Soxlet extractor was dried overnight in a vacuum oven maintained at 140°C, resulting in 20.48 g of the segmented block copolymer.

### Comparison 2

### Preparation of a 50/50 Blend From Poly(Ether Imide) and Poly(Ether Ether Ketone)

In order to demonstrate that the polymers prepared in Examples 4 and 5 were copolymers and not blends, the procedure described in Example 4 was repeated, excepting that a catalyst was not used. A mixture of 15.00 g of the poly(ether imide), 5.00 g of the poly(ether ether ketone), and 20.00 g of diphenyl sulfone was prepared. The stirred mixture was heated from 250°C to 328°C over a 28 minute period, then maintained at approximately 320°C for 1 hour. After workup as in Example 4, 99% of the poly(ether imide) was extracted with methylene chloride.

## Claims

1. A process for the preparation of poly(aryl ether/thioether) segmented block copolymers, comprising:
contacting at a temperature from 150°C to 400°C at least one activated poly(aryl ether/thioether) polymer, corresponding to the formula: 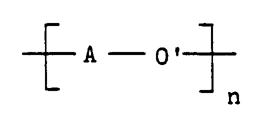 wherein A is an activated aromatic radical,
O' is oxygen or sulfur in the case of a thioether, and n represents the number of repeated activated aryl ether/thioether units,
with at least one activated poly(aryl ether/thioether) polymer corresponding to the formula: 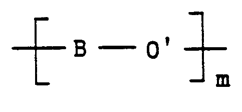 wherein B is an activated aromatic radical, different from the A radical, O' is oxygen or sulfur in the case of a thioether, and m represents the number of repeated activated aryl ether/thioether units, wherein A and B are different and independently selected from 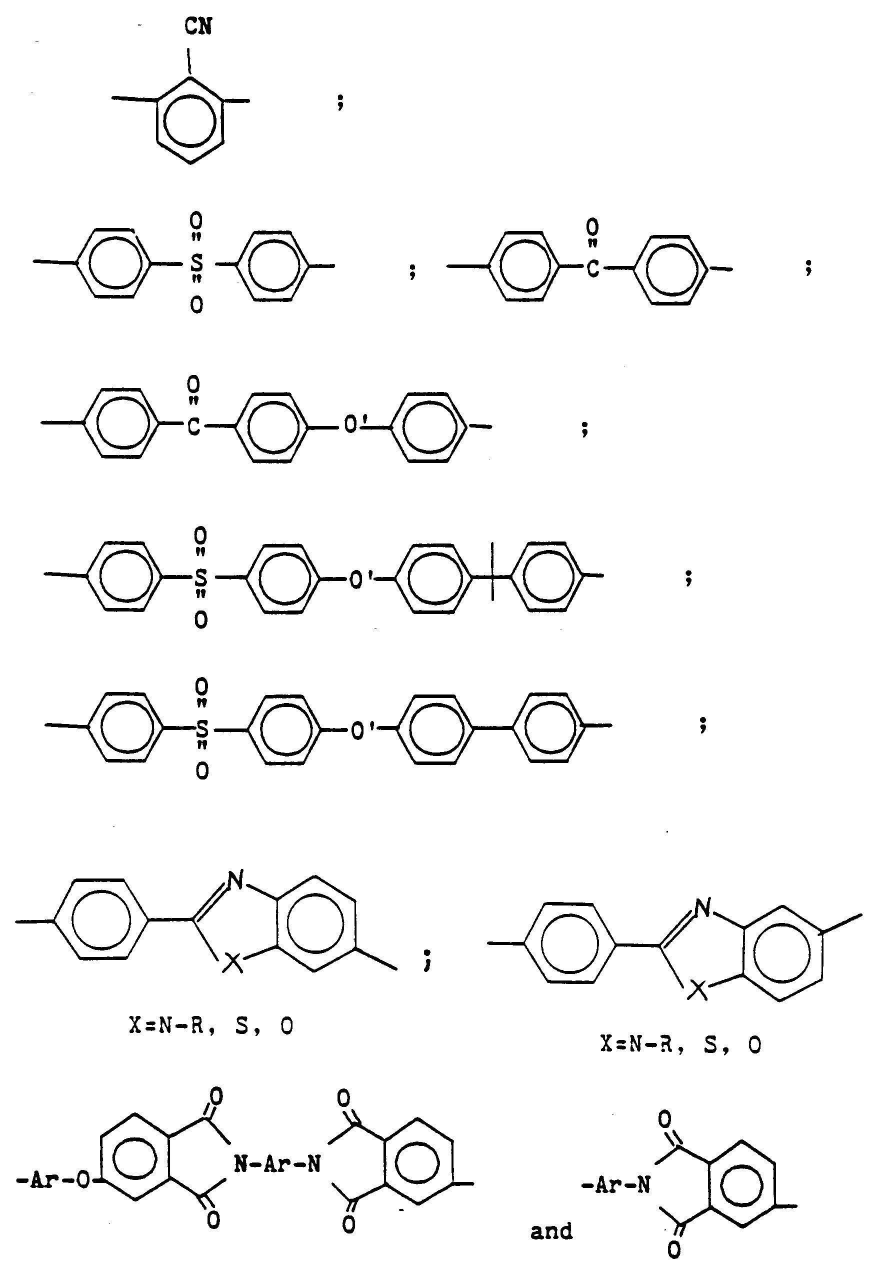 wherein Ar, independently each occurrence is m-phenylene, p-phenylene, pC₆H₄C(CH₃)₂pC₆H₄, pC₆H₄OpC₆H₄, pC₆H₄SpC₆H₄, pC₆H₄CH₂pC₆H₄, pC₆H₄C₆H₄, or pC₆H₄SO₂pC₆H₄; X is N-R, S or O; and R is C₁-C₁₂ alkyl.
in the presence of a catalyst corresponding to the formula:
MₚZ_{q}
wherein M represents a monovalent or multivalent metal ion, Z is a halide, carbonate, bicarbonate, phenoxide, bisphenoxide, alkoxide, cyanide, nitrate, nitrite, hydroxide, phosphate, or aryl or alkyl carboxylate ion, and p and q are each independently whole numbers in the range from 1 to 6 which satisfy chemical valency requirements to prepare a poly(aryl ether/thioether) segmented block copolymer corresponding to the formula: 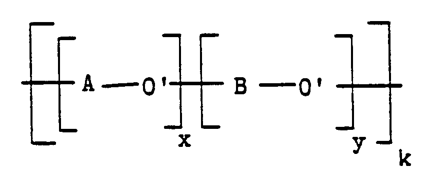 wherein A, B, and O' are as previously defined, x represents the number of repeated activated aryl ether/thioether units containing the A radical, y represents the number of repeated activated aryl ether/thioether units containing the B radical, and k represents the overall degree of polymerization, from 2 to 100.

2. The process according to Claim 1, wherein the catalyst is selected from the group consisting of cesium fluoride, cesium carbonate and cesium phenoxide.

3. The process according to Claim 1, wherein the contacting is carried out in the presence of a solvent selected from the group consisting of diphenyl sulfone and benzophenone.

4. The process according to Claim 1, wherein the catalyst is present in an amount from 0.001 to 10.0 weight percent relative to the total weight of polymers.

5. The process according to Claim 1, wherein x and y are each independently from 2 to 10,000.

## Patentansprüche

1. Verfahren zum Herstellen von Poly(arylether/thioether)blockcopolymeren mit Segmenten durch Inberührungbringen bei einer Temperatur von 150°C bis 400°C mindestens eines aktivierten Poly(arylether/thioether)polymeren, das der Formel -[A-O'-]ₙ entspricht, in der A ein aktivierter aromatischer Rest ist, O' Sauerstoff oder, im Fall eines Thioethers, Schwefel ist und n die Zahl der wiederkehrenden aktivierten Arylether/Thioether-Einheiten ist, mit mindestens einem aktivierten Poly(arylether/thioether)polymeren, das der Formel -[B-O'-]ₘ entspricht, in der B ein von A abweichender aktivierter aromatischer Rest ist, O' Sauerstoff oder, im Falle eines Thioethers, Schwefel ist und m die Zahl der wiederkehrenden aktivierten Arylether/Thioether-Einheiten ist und wobei A und B unterschiedlich und unabhängig ausgewählt sind aus 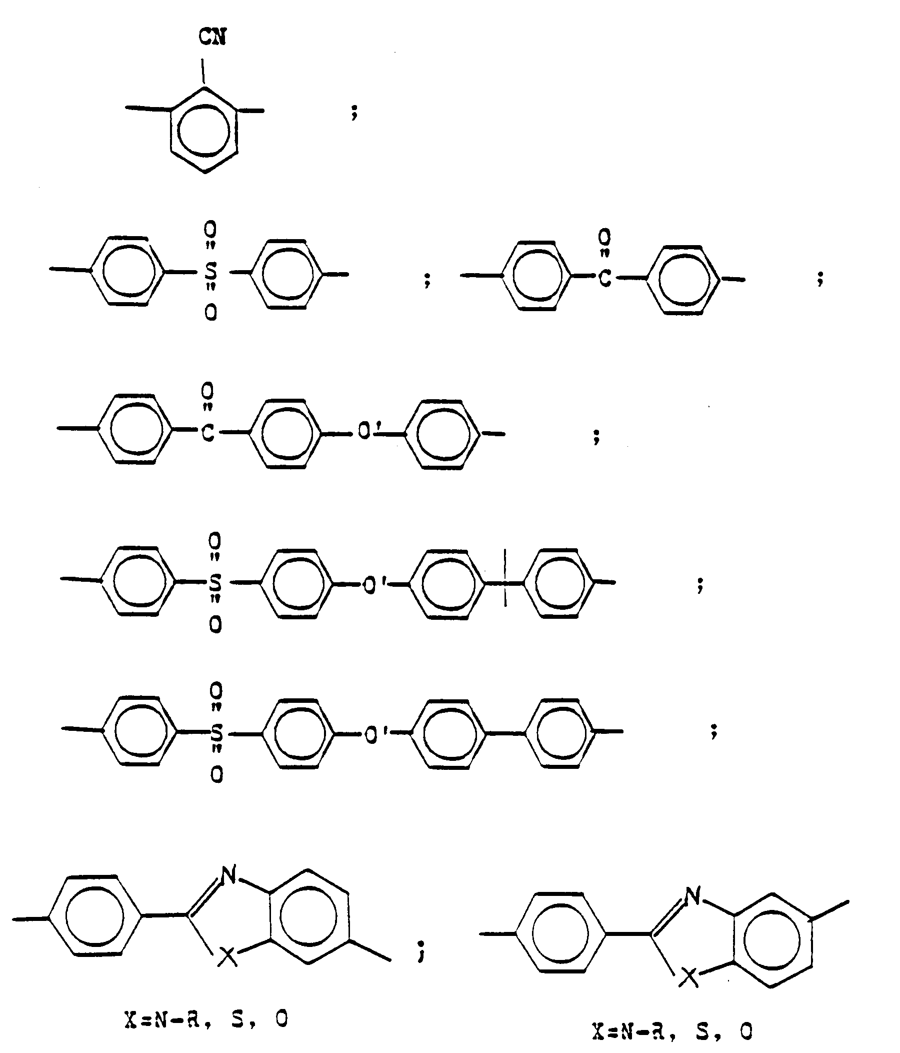 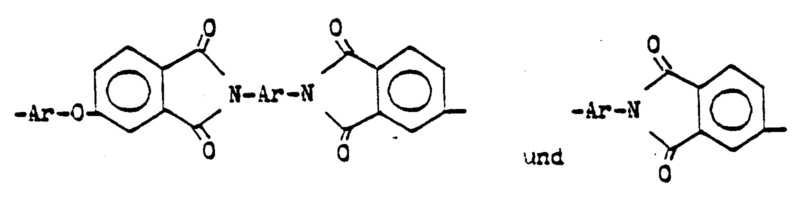 in der Ar unabhängig bei jedem Auftreten m-Phenylen, p-Phenylen, p-C₆H₄C(CH₃)₂-p-C₆H₄, p-C₆H₄O-p-C₆H₄, p-C₆H₄S-p-C₆H₄, p-C₆H₄CH₂-p-C₆H₄, p-C₆H₄C₆H₄ oder p-C₆H₄SO₂-p-C₆H₄ ist, X N-R, S oder O ist und R C₁-C₁₂-Alkyl ist, in Gegenwart eines Katalysators, der der Formel MₚZ_{q} entspricht, in der M ein einwertiges oder mehrwertiges Metallion ist, Z ein Halogen-, Carbonat-, Bicarbonat-, Phenoxid-, Bisphenoxid-, Alkoxid-, Cyanid-, Nitrat-, Nitrit-, Hydroxyl-, Phosphat- oder Aryl- oder Alkylcarboxylation ist und p und q sind jeweils unabhängig ganze Zahlen im Bereich von 1 bis 6, um den chemischen Valenzerfordernissen zu entsprechen, um ein Poly(arylether/thioether)blockcopolymer mit Segmenten herzustellen, das der Formel 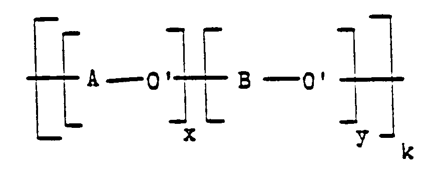 entspricht, in der A, B und O' die zuvor angegebene Bedeutung haben, x ist die Zahl der wiederkehrenden aktivierten Arylether/Thioether-Einheiten, die den A-Rest enthalten, y ist die Zahl der wiederkehrenden aktivierten Arylether/Thioether-Einheiten, die den B-Rest enthalten, und k ist der Gesamtpolymerisationsgrad, der von 2 bis 100 beträgt.

2. Verfahren nach Anspruch 1,
**dadurch gekennzeichnet,**
daß der Katalysator ausgewählt ist aus der Gruppe bestehend aus Cäsiumfluorid, Cäsiumcarbonat und Cäsiumphenoxid.

3. Verfahren nach Anspruch 1,
**dadurch gekennzeichnet,**
daß das Inberührungbringen in Gegenwart eines Lösemittels ausgeführt wird, ausgewählt aus der Gruppe bestehend aus Diphenylsulfon und Benzophenon.

4. Verfahren nach Anspruch 1,
**dadurch gekennzeichnet,**
daß der Katalysator in einer Menge von 0,001 bis 10,0 Gew.-%, bezogen auf Gesamtgewicht des Polymeren, vorhanden ist.

5. Verfahren nach Anspruch 1,
**dadurch gekennzeichnet,**
daß x und y jeweils unabhängig von 2 bis 10.000 sind.

## Revendications

1. Procédé pour la préparation de copolymères à blocs segmentés de poly(aryl éther/thioéther), consistant à:
mettre en contact à une température de 150° à 400° au moins un polymère activé de poly(aryl éther/thioéther) correspondant à la formule: 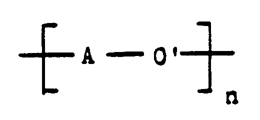 dans laquelle A représente un radical aromatique activé, O' représente un atome d'oxygène ou de soufre dans le cas d'un thioéther, et n représente le nombre de motifs aryl éther/thioéthers activés répétés,
avec au moins un polymère de poly(aryl éther/thioéther) activé correspondant à la formule 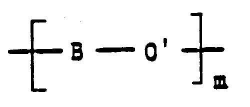 dans laquelle B représente un radical aromatique activé, différent du radical A, O' représente un atome d'oxygène ou de soufre dans le cas d'un thioéther, et m représente le nombre de motifs aryl éther/thioéthers activés répétés, où A et B sont différents et choisis indépendamment parmi: 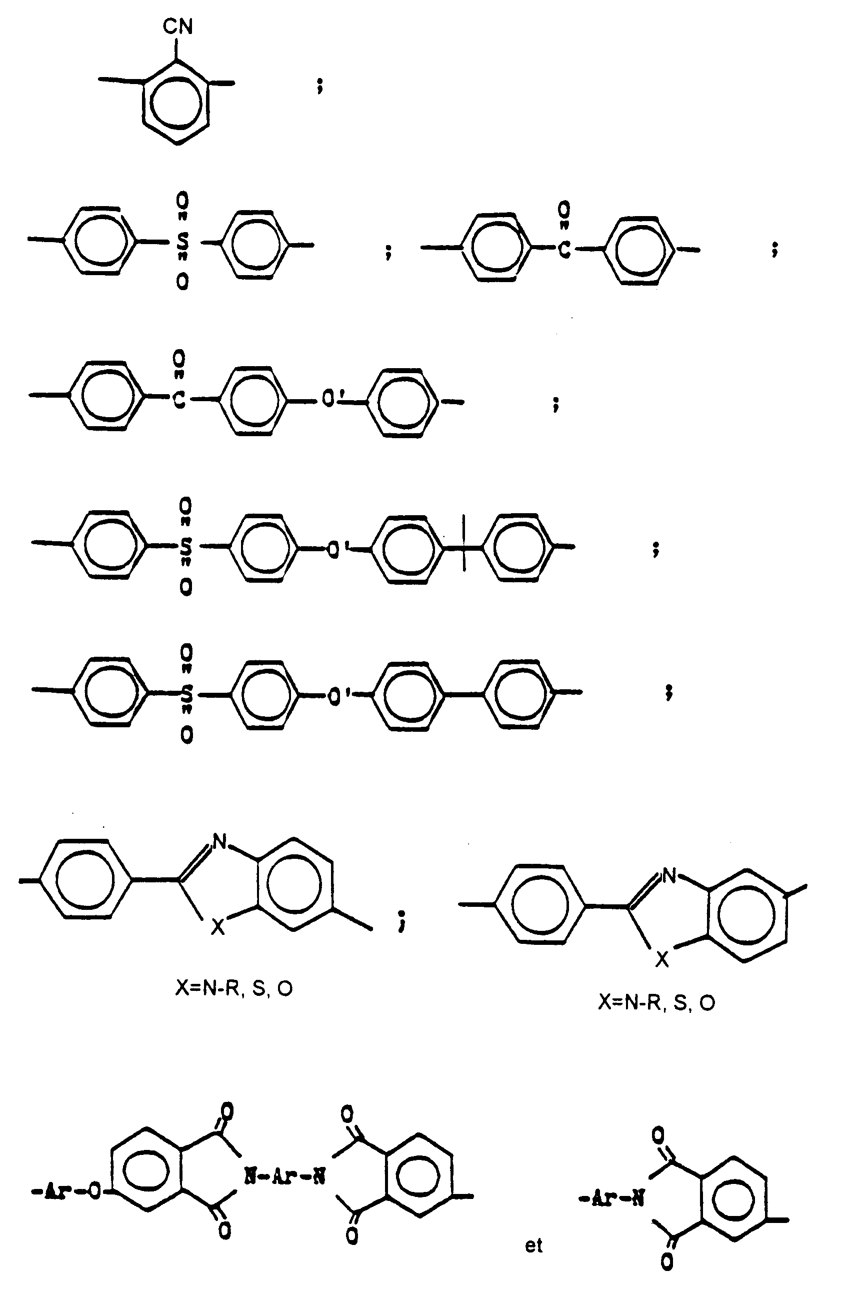 où Ar, indépendamment chaque fois, représente un groupe m-phénylène, p-phénylène, p-C₆H₄C(CH₃)₂p-C₆H₄, p-C₆H₄Op-C₆H₄, p-C₆H₄Sp-C₆H₄, p-C₆H₄CH₂p-C₆H₄, p-C₆H₄SC₆H₄, ou p-C₆H₄SO₂p-C₆H₄; X représente N-R, S ou O; et R représente un groupe alkyle en C₁ à C₁₂
en présence d'un catalyseur correspondant à la formule:
MₚZ_{q}
dans laquelle M représente un ion métallique monovalent ou multivalent, Z représente un ion halogénure, carbonate, bicarbonate, phénolate, bisphénolate, alkoxyde, cyanure, nitrate, nitrite, hydroxyde, phosphate, ou carboxylate d'aryle ou d'alkyle, et p et q sont chacun indépendamment des nombres entiers dans la gamme de 1 à 6 qui satisfont les exigences de valence chimique pour préparer un copolymère à blocs segmentés de poly(aryl éther/thioéther) correspondant à la formule: 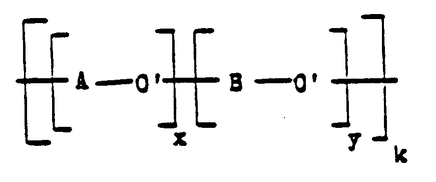 dans laquelle A, B, et O' sont tels que définis précédemment, x représente le nombre de motifs d'aryl éther/thioéthers activés répétés contenant le radical A, y représente le nombre de motifs d'aryl éther/thioéther activés répétés contenant le radical B, et k représente le degré global de polymérisation, de 2 à 100.

2. Procédé selon la revendication 1, dans lequel le catalyseur est choisi parmi le groupe constitué de fluorure de césium, de carbonate de césium, et de phénolate de césium.

3. Procédé selon la revendication 1, dans lequel la mise en contact est réalisée en présence d'un solvant choisi dans le groupe constitué de la diphénylsulfone et de la benzophénone.

4. Procédé selon la revendication 1, dans lequel le catalyseur est présent en une quantité de 0,001 à 10,0 pourcent en poids par rapport au poids total des polymères.

5. Procédé selon la revendication 1, dans lequel x et y valent chacun indépendamment de 2 à 10 000.
